# EUROPEAN PATENT APPLICATION

(11) **EP 4 592 358 A1**
(43) Date of publication of application: **30.07.2025**
(21) Application number: 23867889.0
(22) Date of filing: 27.07.2023
(51) Int. Cl.: C08L 101/00, B29C 45/00, B32B 15/08, C08K 3/08

(54) **RESIN MOLDED BODY AND METHOD FOR PRODUCING RESIN MOLDED BODY**

(30) Priority: 21.09.2022 JP 2022149705
(71) Applicant: Inoac Corporation, Nagoya-shi, Aichi 450-0003 (JP)
(72) Inventor: KONDO Mitsuhiro, Anjo-shi, Aichi 444-1195 (JP)
(74) Representative: Gille Hrabal Partnerschaftsgesellschaft mbB Patentanwälte
(86) International application number: PCT/JP2023/027566
(87) International publication number: WO 2024/062763

(57) **Abstract**

A resin molding includes: a light-transmissive resin layer; and a shiny member contained in the resin layer, wherein the shiny member includes: a metal layer formed from a metal material; a colored layer that contains a coloring agent and covers the metal layer; and an exposed portion in which the metal layer is exposed from the colored layer.

## Description

### TECHNICAL FIELD

The present disclosure relates to a resin molding and a method for producing the same.

### BACKGROUND ART

A resin molding in which a clear layer is layered over a resin layer that includes a pigment and shiny members is conventionally known (e.g., see Patent Literature 1). Furthermore, a resin molding including a resin layer in which shiny members such as aluminum particles are added to a resin material containing a coloring agent is also known (e.g., see Patent Literature 2). Shiny resin moldings are realized by including shiny members in a resin layer in such a manner.

### CITATION LIST

### PATENT LITERATURE

[Patent Literature 1] Japanese Patent Laid-Open No. 2014-168916
[Patent Literature 2] Japanese Patent Laid-Open No. 2004-83608

### SUMMARY OF INVENTION

### TECHNICAL PROBLEM

The resin molding disclosed in Patent Literature 1 is provided with excellent shininess by the clear layer being layered over the resin layer containing shiny members. On the other hand, the resin molding disclosed in Patent Literature 1 requires a process for forming the clear layer over the resin layer. Furthermore, uneven coloring agent distribution, etc., cause the problem of the resin moldings disclosed in Patent Literatures 1 and 2 having inferior shininess.

The present disclosure aims to provide a resin molding having excellent shininess without providing a clear layer.

### SOLUTION TO PROBLEM

A resin molding according to the present disclosure includes: a light-transmissive resin layer; and a shiny member contained in the resin layer. The shiny member includes: a metal layer formed from a metal material; a colored layer that contains a coloring agent and covers the metal layer; and an exposed portion in which the metal layer is exposed from the colored layer.

Furthermore, a resin-molding production method according to the present disclosure includes: preparing a metal layer that is formed from a metal material; covering the metal layer with a colored layer that contains a coloring agent; producing shiny members by cutting the metal layer and the colored layer in a direction intersecting a surface of the metal layer that is covered with the colored layer; and mixing the shiny members into a light-transmissive resin material and forming a resin layer from the resin material.

### ADVANTAGEOUS EFFECTS OF INVENTION

According to this resin molding, because the resin layer is light transmissive, light entering the resin layer is reflected by the exposed portion and the colored layer of the shiny member. Thus, this resin molding can exhibit an appearance having excellent shininess even though the resin molding is not provided with a clear layer.

Furthermore, this resin-molding production method does not include a process for forming a clear layer over the resin layer. Thus, a resin molding having excellent shininess can be produced at low cost.

### BRIEF DESCRIPTION OF DRAWINGS

FIG. 1 is a cross-sectional view of a resin molding.
FIG. 2 is a diagram illustrating an example of the resin molding installed in a vehicle.
FIG. 3 is a cross-sectional view of a shiny member.
FIG. 4 is a diagram illustrating a device for producing the resin molding.
FIG. 5 is diagram (1) illustrating a method for producing the resin molding.
FIG. 6 is diagram (2) illustrating the method for producing the resin molding.
FIG. 7 includes cross-sectional views of resin moldings in other embodiments.

### DESCRIPTION OF EMBODIMENTS

In the following, an embodiment of the present disclosure will be described with reference to the drawings.

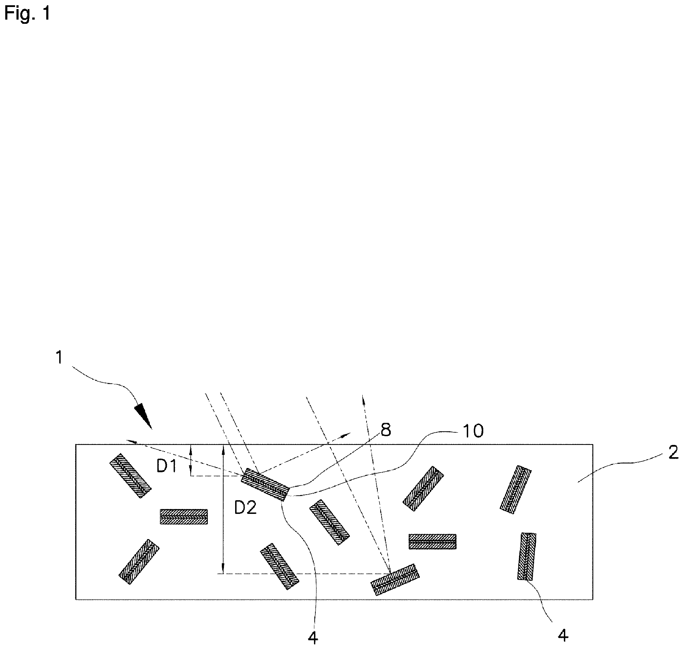

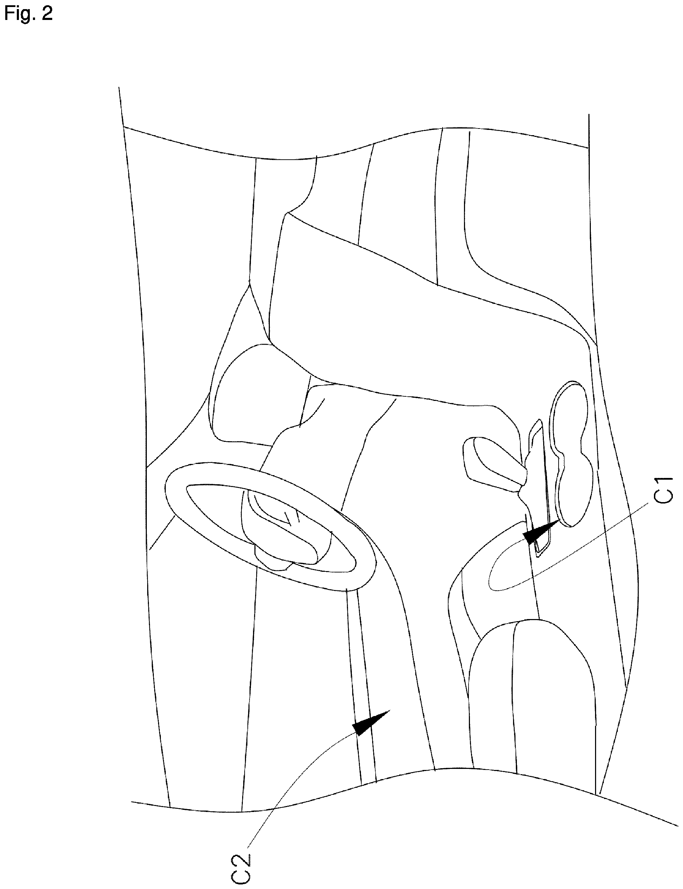

As illustrated in FIG. 1, a resin molding 1 includes: a resin layer 2; and a plurality of shiny members 4 contained in the resin layer 2. As illustrated in FIG. 2, in the present embodiment, the resin molding 1 is used for a decorative portion C1 on the rim of a cup holder used in the automobile interior. Furthermore, the resin molding 1 is used for a decorative portion C2 of a door trim, a decorative portion (unillustrated) of the automobile exterior, etc. The resin molding 1 used in such portions will be seen by users, and thus is required to have high aesthetics. Due to this, the resin molding 1 is required to be shiny and rich in color without unevenness in color.

As illustrated in FIG. 1, the resin layer 2 is a layer serving as the main material among materials forming the resin molding 1. In the present embodiment, the resin molding 1 is formed by injection molding a resin material forming the resin layer 2. In the present embodiment, the resin material forming the resin layer 2 is a thermoplastic resin. For example, the thermoplastic resin is polypropylene, polyethylene, ABS resin, acrylic resin, polycarbonate (PC) resin, or the like. Furthermore, as the resin material forming the resin layer 2, a thermoplastic resin or an alloy of the thermoplastic resin can be selected. For example, the thermoplastic resin is polyamide, polyethylene terephthalate, modified polyphenylene ether, or the like. Furthermore, the resin material forming the resin layer 2 may be a resin material obtained by adding a fibrous or flaky filler to a thermoplastic resin. In any case, the resin layer 2 may be formed from any resin material as long as the resin material is a thermoplastic resin.

The resin layer 2 is light transmissive. Specifically, the resin layer 2 is formed so as to be light transmissive by being formed without including any coloring agent in the above-described resin material. Preferably, the resin layer 2 is colorless and transparent. The resin layer 2 may be slightly colored due to the color of the resin material itself.

Next, the shiny members 4 will be described. The shiny members 4 are in the shape of plates or flakes. The length of the shiny members 4 in a long direction among in-plane directions of the shiny members 4 is 10-200 µm. More preferably, the length of the shiny members 4 in the long direction is 50-150 µm. Note that it is sufficient that the length in a short direction among the in-plane directions be equivalent to the length in the long direction.

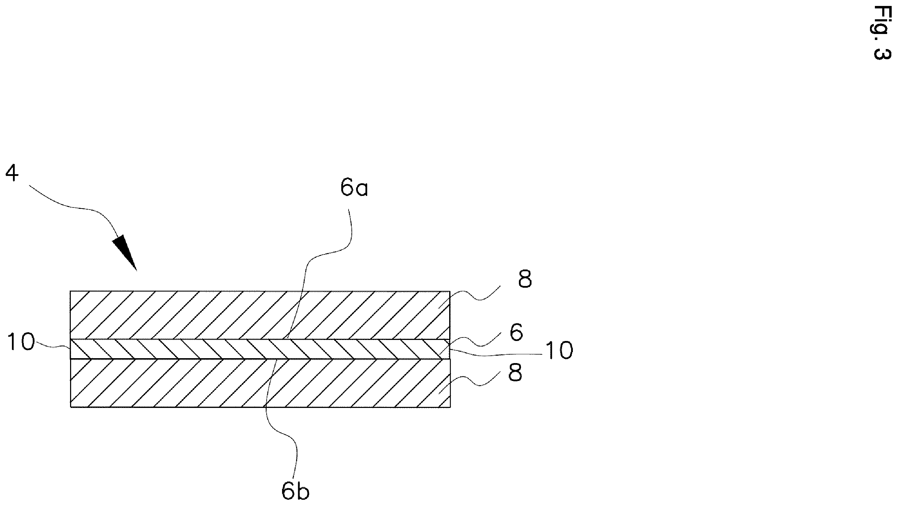

As illustrated in FIG. 3, the shiny members 4 each include: a metal layer 6 that is formed from a metal material; and colored layers 8 that include a coloring agent and cover the metal layer 6. The metal layer 6 is obtained by forming a thin film of the metal material. For example, the metal material can be selected from aluminum, chromium, gold, silver, platinum, nickel, etc. In the present embodiment, the metal layer 6 is a metal thin film that is obtained by physically or chemically vapor depositing the above-described metal material and shaping the deposited film. The thickness of the metal layer 6 formed by such vapor deposition is 1-1000 nm. More preferably, the thickness of the metal layer 6 is 2-100 nm.

The colored layers 8 are coating-film layers covering the metal layer 6. In the present embodiment, the colored layers 8 include a first colored layer that covers a front surface 6a of the thin film forming the metal layer 6, and a second colored layer that covers a rear surface 6b of the metal layer 6. Note that, in the present embodiment, the upper side and the lower side of the metal layer 6 in FIG. 3 are the front surface 6a and the rear surface 6b, respectively. In the metal layer 6, the lower side may be the front surface 6a and the upper side may be the rear surface 6b. The colored layers 8 are each formed from a colored-layer-forming material that contains a coloring agent such as a dye, a colorant, or a pigment. More preferably, it is beneficial that each of the colored layers 8 be formed from a colored-layer-forming material that contains a pigment having higher UV resistance than a dye. It is sufficient that the colored-layer-forming material be a conventional coating material or coating-film-layer-forming material containing such a pigment. The thickness of the colored layers 8 is 1-30 µm. More preferably, the thickness of the colored layers 8 is 5-10 µm. That is, the colored layers 8 are thicker than the metal layer 6.

The shiny members 4 further include exposed portions 10. The exposed portions 10 are portions in which the metal layer 6 is exposed from the colored layers 8. In the present embodiment, the shiny members 4 include an exposed portion 10 at end portions in the long direction or the short direction, or in other words, at end portions in an in-plane direction. The exposed portions 10 are formed by both end portions of the metal layer 6 sandwiched between the colored layers 8 being exposed.

Next, a method for producing the resin molding 1 will be described.

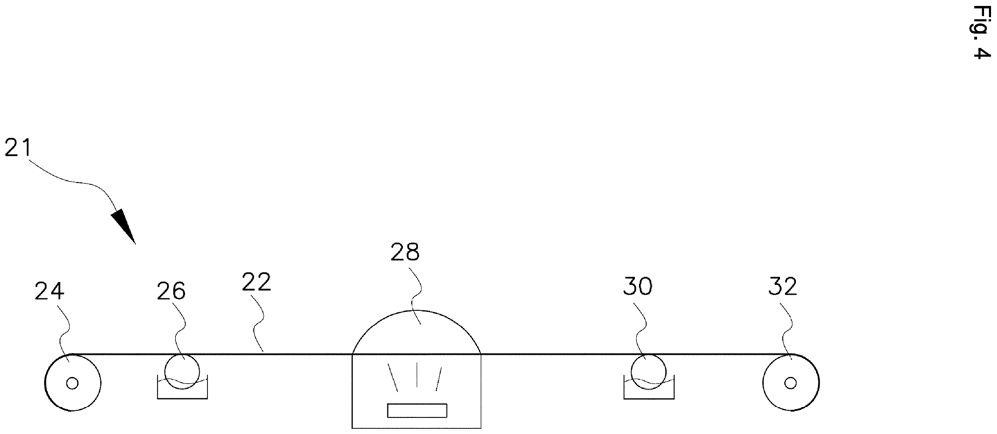

As illustrated in FIG. 4, the resin molding 1 is produced using a production device 21. The production device 21 includes: a first drum 24 that feeds a film 22 wound therearound; a first application roller 26 that applies a colored-layer-forming material onto the film 22; a vapor-deposition device 28 that vapor deposits a metal material on a colored layer 8 to form a metal layer 6; a second application roller 30 that applies a colored-layer-forming material onto the metal layer 6; and a second drum 32 that winds up the film 22.

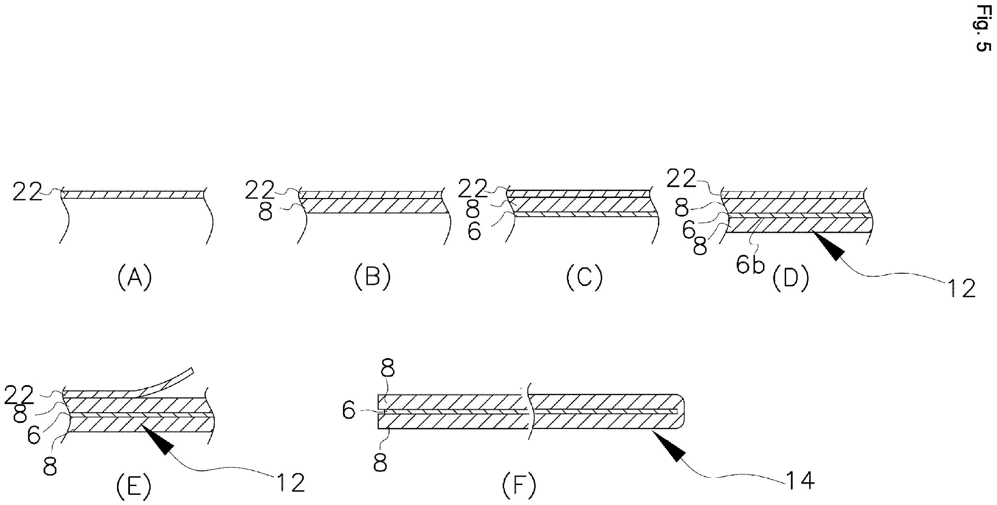

As illustrated in FIG. 5A, first, the film 22 is fed from the first drum 24 (see FIG. 4). The film 22 is obtained by forming a thin film of a resin material. For example, the resin material is polyethylene terephthalate, polycarbonate, polypropylene, or the like. Next, as illustrated in FIG. 5B, a colored layer 8 is formed on the film 22 fed from the first drum 24. The colored layer 8 is formed by a colored-layer-forming material being applied by the first application roller 26 (see FIG. 4).

Next, as illustrated in FIG. 5C, the film 22 having a colored layer 8 formed thereon is passed through the vapor-deposition device 28 (see FIG. 4). The vapor-deposition device 28 heats and thereby vaporizes or sublimates the above-described metal material to cause the metal material to adhere to the colored layer 8. Thus, a metal thin film is further formed on the film 22 having a colored layer 8 formed thereon. Consequently, the metal layer 6 is further formed on the film 22 having a colored layer 8 formed thereon.

Next, as illustrated in FIG. 5D, a colored-layer-forming material is applied to the metal layer 6 by the second application roller 30 (see FIG. 4). Thus, a colored layer 8 is formed on the metal layer 6. In the present embodiment, this colored layer 8 is positioned on the rear surface 6b of the metal layer 6. The colored-layer-forming material applied by the second application roller 30 may be the same colored-layer-forming material as that applied by the first application roller 26 (see FIG. 4). Alternatively, the colored-layer-forming material applied by the second application roller 30 may be different from the colored-layer-forming material applied by the first application roller 26. The sheet 12 with film formed in such a manner is wrapped around the second drum 32 (see FIG. 4).

Then, as illustrated in FIG. 5E, the film 22 is peeled off from the sheet 12 with film. Thus, a sheet 14 that is a sheet-shaped shiny member as illustrated in FIG. 5F is produced. In the production process, colored-layer-forming material may flow to one or more end portions of the metal layer 6 and cover up the metal layer 6. That is, one or more end portions of the sheet 14 may be covered with colored-layer-forming material (see the right-side end portion of the sheet 14 in FIG. 5F). Furthermore, one or more colored layers 8 may protrude from the metal layer 6 at one or more end portions of the sheet 14 (see the left-side end portion of the sheet 14).

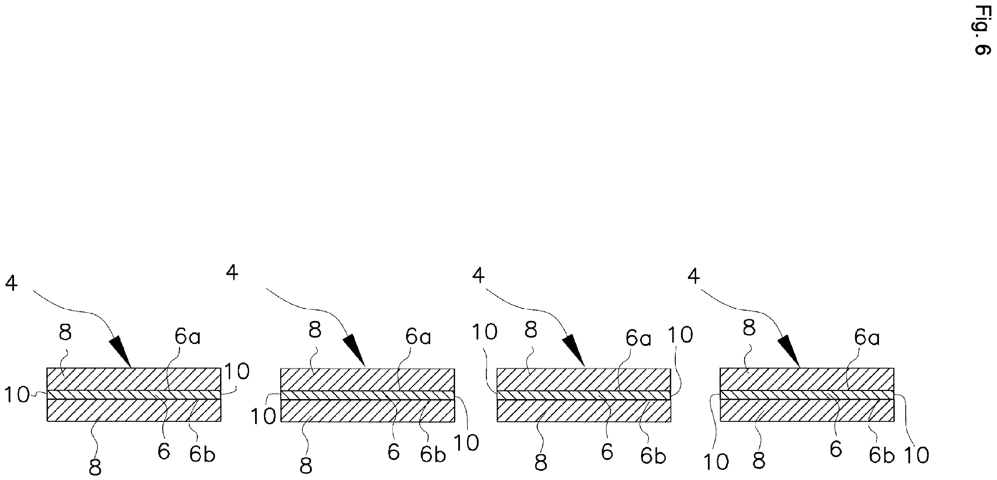

Next, as illustrated in FIG. 6, the sheet 14 is cut and the shiny members 4 are produced. The sheet 14 is cut in a direction intersecting one of the front surface 6a and the rear surface 6b of the thin-film-shaped metal layer 6 covered with the colored layers 8. The sheet 14 is cut into the above-described dimensions. Exposed portions 10 in which the metal layer 6 is exposed from the colored layers 8 are formed at the cut surfaces of the sheet 14. Note that, in the present embodiment, the four end portions of the sheet 14 are cut off before the sheet 14 is cut. Thus, the metal layer 6 is exposed from the colored layers 8. Thus, an exposed portion 10 is formed at both end portions in the long direction L of all shiny members 4. However, the process of cutting off the end portions of the sheet 14 is not necessarily required.

Next, the shiny members 4 produced as described above are mixed into a light-transmissive resin material. Thus, the resin layer 2 is formed. Note that shiny members 4 having colored layers 8 of different colors applied thereto may be mixed into the resin material. In the present embodiment, the shiny members 4 are kneaded into the above-described resin material. Subsequently, the resin material having the shiny members 4 mixed therein is injected into and ejected from an injection molding mold. The resin molding 1 is produced in such a manner.

The resin layer 2 of the resin molding 1 produced in such a manner contains no coloring agent separate from the shiny members 4, or barely any such coloring agent, if at all. Due to this, the resin layer 2 is light transmissive. Thus, in the resin molding 1, there is no uneven coloring agent distribution on the surface of the resin layer 2, which may otherwise occur if the resin layer 2 contains a coloring agent. Accordingly, the resin molding 1 can transmit light incident thereon from the outside to the inside of the resin layer 2.

Specifically, as illustrated using virtual lines in FIG. 1, light entering the resin layer 2 is reflected by the colored layers 8 after advancing within the resin layer 2. In the present embodiment, the resin molding 1 is injection molded in a state in which the shiny members 4 have been mixed into the resin material. Thus, the shiny members 4 are disposed so as to be dispersed inside the resin layer 2. Thus, the light is randomly reflected at portions close to the light-incident surface (see D1 in FIG. 1) and portions far from the light-incident surface

(see arrow D2 in FIG. 1). Thus, richer color, or that is, depth of color can be achieved with the resin molding 1.

Furthermore, part of the light entering the resin layer 2 is reflected by the exposed portions 10. Thus, the resin molding 1 can exhibit an excellent appearance that has shininess in addition to depth of color.

Furthermore, in the resin molding 1, color is emitted from within the resin layer 2 forming the appearance of the resin molding 1. That is, in the resin molding 1, there is no need to form a clear layer over the resin layer 2 in order to achieve richness in color. Thus, the resin molding 1 can be produced at lower cost.

As described above, according to the present disclosure, the resin molding 1 exhibiting an appearance having excellent shininess can be provided without providing a clear layer over the resin layer 2.

### <Other Embodiments>

An embodiment of the present disclosure has been described above; however, the present disclosure is not limited to the above-described embodiment, and various modifications can be made without departing from the spirit and scope of the invention.

For example, the resin molding 1 has been described in the above-described embodiment based on an example of a member to be used in an automobile; however, the present disclosure is not limited to this. The resin molding 1 may be a resin member for applications other than automobiles.

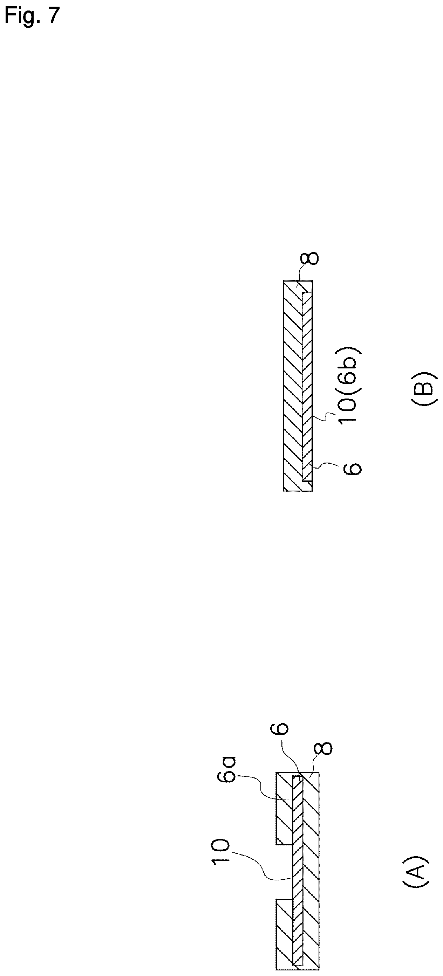

Furthermore, description has been provided in the above-described embodiment based on an example in which an exposed portion 10 is provided at both end portions in the long direction L; however, the present disclosure is not limited to this. For example, as illustrated in FIG. 7A, an exposed portion 10 may be provided by cutting away part of a colored layer 8 to expose part of the front surface 6a of the metal layer 6. Alternatively, as illustrated in FIG. 7B, an exposed portion 10 may be provided by exposing the entire rear surface 6b of the metal layer 6. In any case, the exposed portion 10 may be in any form as long as part of the metal layer 6 is exposed from a colored layer 8.

Furthermore, the colored layer 8 on the rear surface 6b and the colored layer 8 on the front surface 6a may be provided with different colors. This enables the resin molding 1 to also achieve depth of color attributable to different color hues in addition to the depth of color produced by light rays being reflected at random positions.

### REFERENCE SIGNS LIST

- 1:: Resin molding
- 2:: Resin layer
- 4:: Shiny member
- 6:: Metal layer
- 6a:: Front surface
- 6b:: Rear surface
- 8:: Colored layer
- 10:: Exposed portion
- 12:: Sheet
- C1, C2:: Decorative portion
- L:: Long direction
- S:: Short direction

## Claims

1. A resin molding comprising:
a light-transmissive resin layer; and
a shiny member contained in the resin layer,
wherein the shiny member includes:
a metal layer formed from a metal material;
a colored layer that contains a coloring agent and covers the metal layer; and
an exposed portion in which the metal layer is exposed from the colored layer.

2. The resin molding according to claim 1,
wherein the metal layer is formed in a shape of a thin film, and the exposed portion is provided at an end portion of the metal layer.

3. The resin molding according to claim 1 or 2,
the metal layer has a front surface and a rear surface, and
the colored layer includes a first colored layer and a second colored layer that respectively cover the front surface and the rear surface.

4. A method for producing a resin molding, the method comprising:
preparing a metal layer that is formed from a metal material;
covering the metal layer with a colored layer that contains a coloring agent;
producing shiny members by cutting the metal layer and the colored layer in a direction intersecting a surface of the metal layer that is covered with the colored layer; and
mixing the shiny members into a light-transmissive resin material and forming a resin layer from the resin material.
